# EUROPÄISCHE PATENTSCHRIFT

(11) **EP 3 189 245 B1**
(45) Veröffentlichungstag und Bekanntmachung des Hinweises auf die Patenterteilung: **19.02.2020**
(21) Anmeldenummer: 15735950.6
(22) Anmeldetag: 09.07.2015
(51) Int. Cl.: F16D 65/18

(54) **BREMSVORRICHTUNG FÜR EIN KRAFTFAHRZEUG UND VERFAHREN ZUR ANSTEUERUNG DER BREMSVORRICHTUNG**
BRAKING DEVICE FOR A MOTOR VEHICLE, AND METHOD FOR CONTROLLING THE BRAKING DEVICE
DISPOSITIF DE FREINAGE POUR VÉHICULE AUTOMOBILE ET PROCÉDÉ DE COMMANDE DU DISPOSITIF DE FREINAGE

(30) Priorität: 01.09.2014 DE 102014217445
(43) Veröffentlichungstag der Anmeldung: 12.07.2017
(73) Patentinhaber: Robert Bosch GmbH, 70442 Stuttgart (DE)
(72) Erfinder: BAEHRLE-MILLER, Frank, 71101 Schoenaich (DE); HAUBER, Simon, 71691 Freiberg Am Neckar (DE)
(86) Internationale Anmeldenummer: PCT/EP2015/065679
(87) Internationale Veröffentlichungsnummer: WO 2016/034314

(56) Entgegenhaltungen:
- WO-A1-2005/059395
- WO-A2-2015/124545
- DE-A1- 4 229 042
- DE-A1-102012 205 576
- US-A1- 2013 068 572

## Beschreibung

Die vorliegende Erfindung bezieht sich auf eine Bremsvorrichtung für ein Kraftfahrzeug und ein Verfahren zur Ansteuerung der Bremsvorrichtung.

Bedingt durch die Wirkungsweise einer hydraulischen Radbremse wird bei nichtbetätigter Betriebsbremse durch den Kolbendichtring der Bremskolben etwas in das Bremssattelgehäuse zurückgezogen. Dazu kann bei dynamischen Fahrmanövern (schnelle Kurvenfahrt, Fahren über Unebenheiten) die Bremsscheibe etwas aus ihrer Ruheposition ausgelenkt werden und den Bremskolben noch weiter in das Bremssattelgehäuse zurückdrücken. Insgesamt wird damit das Volumen vergößert, das benötigt wird, um den Bremskolben wieder an die Bremsbeläge anzulegen. Da die Förderleistung des hydraulischen Aktuators eines ESP Systems (Elektronisches Stabilitätsprogramm) beschränkt ist, wird zunächst hydraulisches Volumen im Bremssattelgehäuse benötigt, um den Bremskolben in Richtung der Beläge zu schieben. Erst anschließend ist ein Druck- und ein Kraftaufbau möglich. Hierbei kommt es zu einem Zeitverlust zwischen Bremswunschanforderung und Bremskraftbereitstellung.

Aus dem Stand der Technik ist beispielsweise die DE 10 2006 029 979 A1 bekannt. Hierbei wird ein Verfahren zum Betrieb einer Bremsanalage eines Kraftfahrzeugs mit mindestens einem Betriebsmodus mit einer Vorbefüllung zur zumindest teilweisen Überwindung eines Lüftspiels einer oder mehrerer Radbremsen vor einer erwarteten Betätigung eines Bremspedals beschrieben. Die Überwindung des Lüftspiels erfolgt hier durch das Hydraulikaggregat, d.h. durch die hydraulische Betriebsbremsanlage.

Aus dem Stand der Technik ist beispielsweise weiterhin die DE 101 11 076 B4 bekannt. Hierbei wird ein Bremsscheibenwischer beschrieben, wobei bei Erfüllung einer Aktivierungsbedingung die Bremsaktuatoren dergestalt angesteuert werden, dass die Bremsbeläge an die Bremsscheibe derart angelegt werden, dass keine für den Fahrer wahrnehmbare oder eine für den Fahrer kaum wahrnehmbare Verzögerung eingestellt wird. Die Bremsaktuatoren sind hierbei die Aktuatoren einer hydraulischen Betriebsbremsanlage.

Durch den Aufbau eines hydraulischen Drucks mittels der hydraulischen Betriebsbremsanalage zum Anlegen der Bremsbeläge entsteht jedoch bei einem tatsächlichen Anliegen eine Verbindung, d.h. Kopplung zwischen dem Aktuator und den Bremsbelägen. Hierdurch können nicht erwünschte Bremskräfte durch den vorliegenden hydraulischen Druck entstehen. Weiterhin können bspw. durch einen Schlag in der Bremsscheibe nicht gewünschte Bremsimpulse und periodische Geräusche auftreten, welche das Komfortempfinden des Fahrers negativ beeinträchtigen.

Darüber hinaus müssen bekannte hydraulische Aktoren zunächst Bremsflüssigkeit ansaugen um Druck aufbauen zu können. Bei tiefen Temperaturen erhöht sich die Viskosität der Bremsflüssigkeit, wodurch ein Ansaugen erschwert wird. Die Druckbereitstellung findet nur verzögert statt.

Die Aufgabe der vorliegenden Erfindung ist es daher, eine Bremsvorrichtung und ein Verfahren zur Ansteuerung der Bremsvorrichtung bereitzustellen, durch welche die Druckaufbaudynamik verbessert werden kann, das heißt mittels welcher ein Zeitverlust zwischen Bremswunschanforderung und Bremskraftbereitstellung minimiert wird. Bis zur tatsächlichen Anforderung einer Bremskraft (d.h. bis zum Bremswunsch) soll jedoch der Aufbau einer Bremskraft sowie eine Beeinflussung zwischen der Bremsscheibe und dem Bremsaktuator im Wesentlichen vermieden werden.

Diese Aufgabe wird durch die Merkmale der unabhängigen Patentansprüche gelöst. Weiterbildungen der Erfindung sind in den abhängigen Patentansprüchen angegeben.

Hierfür ist eine Bremsvorrichtung für ein Kraftfahrzeug gemäß Anspruch 1 vorgesehen.

Hierunter wird verstanden, dass ein Bremsaktuator mittels des elastischen Elements den Bremsbelag an die Bremsscheibe anlegt. Durch eine Aktuierung des Bremsaktuators wird dabei eine Bewegung oder/und Kraft auf das elastische Element übertragen. Die Kraft und/oder Bewegung ist insbesondere orthogonal zu der Bremsscheibe. Hierbei wird auch eine Bewegung, bzw. elastische Kraft im elastischen Element erzeugt.

Weiterhin kann ein Bremskolben vorgesehen sein, welcher zwischen einem Aktuator der Bremse und dem Bremsbelag positioniert ist. Der Bremskolben leitet dabei bspw. eine vom Aktuator bereitgestellte Kraft oder Bewegung in eine Klemmkraft zwischen dem Bremsbelag und der Bremsscheibe über.

Das elastische Element ist hinsichtlich dessen Elastizität so stark ausgelegt, dass die sich aufgrund der Aktuatorbewegung in dem elastischen Element ergebende elastische Kraft ausreicht, den Bremskolben in Richtung Bremsscheibe zu verschieben. Gleichzeitig ist das elastische Element jedoch hinsichtlich dessen Elastizität so weich ausgelegt, dass bei einem Anlegen der Bremsbeläge die sich - aufgrund der übertragenen elastischen Kraft an die Bremsscheibe - ergebende Klemmkraft so gering ist, dass keine oder nur eine gering Bremskraft erzeugt wird. Eine derart geringe Bremskraft führt daher zu keiner, bzw. einer vom Fahrer nicht oder kaum wahrnehmbaren Verzögerung. Die Bremsbeläge werden damit durch das elastische Element dergestalt an die Bremsscheibe angelegt, dass der Fahrer ein tatsächliches Anliegen der Bremsbeläge nicht wahrnimmt.

Durch die vorgestellte Vorrichtung wird ein großer Teil des notwendigen hydraulischen Volumens bereits im Vorfeld der eigentlichen Bremsung verschoben. Hierdurch kann auch eine Verzögerung der Bremskraftbereitstellung augrund der veränderten Viskosität der Bremsflüssigkeit weitgehend vermieden werden, da hierdurch selbst geringe Volumenströme im Ansaugkanal der Pumpe bei Tieftemperaturen unmittelbar zu einer Bremskraftbereitstellung führen.

Weiterhin ist zu erwähnen, dass eine Scheibe meist nicht vollständig frei von einem Scheibenschlag ist. Die sich bei einem Bremsschlag ergebende Unwucht der Bremsscheibe wird jedoch vorteilhaft durch das elastische Element nicht auf das Bremssystem übertragen, vielmehr erlaubt das elastische Element ein Nachführen des Bremskolbens, bzw. der Bremsbeläge an die Scheibengeometrie. Die dabei auftretenden Bremsmomente sind sehr gering.

Neben der Anwendung für eine Vorbereitung einer Notbremsung sowie einer Anwendung im Bereich autonomes Fahren kann eine derartige Vorrichtung auch als Bremsscheibenwischer eingesetzt werden, um bspw. einen unerwünschten Belag, inbesondere Wasser, von der Bremsscheibe zu wischen, ohne dass der Fahrer hierfür eingreifen muss oder dies aufgrund einer Verzögerung des Fahrzeugs spürt.

Vorteilhafterweise weist die Bremsvorrichtung eine Betriebsbremse und eine automatisierte Feststellbremse auf. Hierunter soll verstanden werden, dass die wenigstens eine Bremse als Betriebsbremse sowie als automatisierte Feststellbremse ausgestaltet sein. Die Bremsvorrichtung weist damit zwei Bremssysteme, insbesondere zwei verschiedene Bremsaktuatoren, auf. Die Betriebsbremse ist insbesondere als hydraulische Einrichtung mit einem Bremsfluid als Betriebsmedium ausgestaltet. Die Betriebsbremse ist insbesondere als reguläre Fahrzeugbremse anzusehen. Die Betriebsbremse kann dabei vorteilhaft als ESP-System ausgestaltet sein. Eine ESP-Pume stellt dabei den Bremsaktuator der Betriebsbremse dar. Alternativ zu einer ESP-Pumpe als Bremsaktuator kann die Druckbereitstellung auch durch einen iBooster oder sonstige druckbereitstellende Systeme (EHB, Plungersysteme) erfolgen.

Die automatisierte Feststellbremse, auch automatisierte (oder automatische) Parkbremse genannt, ist vorteilhaft als elektromechanische Einrichtung, mit einem Elektromotor als Bremsaktuator für die automatisierte Feststellbremse, einer Spindel und einer Spindelmutter ausgestaltet. Die Betriebsbremse und Feststellbremse können in einem Gehäuse vereint sein. Weiterhin können beide Bremsen auch ein und denselben Bremskolben sowie Bremsbeläge und Bremsscheibe verwenden. Vorteilhaft ist eine Kopplung und Unterstützung der beiden Bremsen möglich, bspw. kann die hydraulische Betriebsbremse dafür verwendet werden, einen Zuspann- sowie insbesondere einen Nachspannvorgang der elektromechanischen Feststellbremse mit hydraulischem Druck zu unterstützen.

Aufgrund einer Aktuierung der Feststellbremse wird
der Bremsbelag mittels eines elastischen Elements an die Bremsscheibe angelegt. Für ein Anlegen des Bremsbelags an die Bremsscheibe, wird - wie bereits beschrieben - der Bremskolben verschoben. Hierbei ist vorgesehen, dass ein Bremsaktuator der Feststellbremse mittels des elastischen Elements den Bremskolben verschiebt und somit den Bremsbelag an die Bremsscheibe anlegt.

Hierbei wird vorteilhaft die Möglichkeit genutzt eine bestimmte und dauerhafte Auslenkung der Feststellbremse einzustellen, welche als Basis für den Einsatz des elastischen Elements dient: Die definierte Auslenkung der Feststellbremse unter Berücksichtigung einer möglichen Verformung des elastischen Elements überwindet ein Lüftspiel zwischen Bremsbelag und Bremsscheibe, wobei das elastische Element weiterhin eine teilweise Entkopplung des Aktuators von der Bremsscheibe ermöglicht.

Alternativ könne auch ein hydraulischer Druck bereitgestellt werden, der die Bremskolben an die Bremsbeläge "sanft" andrückt. Hier ist jedoch nachteilig, dass geringe Drücke nur schwer einzustellen sind. Am ehesten geht dies in dem man den Staudruck des hydraulischen Aktuators sowie seiner nachgeschalteter Komponenten ausnutzt. Dabei wird entsprechend viel Volumen verschoben, wobei die Ventile nicht geschlossen werden. Durch den Staudruck werden die Bremskolben an die Bremsbeläge angedrückt. Wird der hydraulische Aktuator ausgeschaltet, geht der Bremskolben wieder in seine Ausgangsposition zurück. Somit lässt sich nicht auf energetisch günstigem Wege ein längeres Anlegen der Bremsbeläge an die Bremsscheibe umsetzten.

Auch das "Einsperren" eines geringen Drucks hat Nachteile. Der eingesperrte Druck bildet dabei einen Widerstand gegen das Zurückdrücken des Bremskolbens in das Bremssattelgehäuse. Da die Bremsscheibe nie 100%ig axialschlagfrei ist, führt ein Scheibenschlag immer wieder zu Druck- und damit auch zu Klemmkraftspitzen, die in erster Linie zu einer erhöhten Reibung und damit auch zu einem erhöhten Verschleiß führen. Darüber hinaus wird durch die Reibung auch die Scheibe sowie die Beläge thermisch belastet.

Die Verwendung der Feststellbremse überwindet die dargestellten Nachteile eines möglichen Einsatzes der Betriebsbremse für eine Einwirkung auf das elastischen Elements zum Anlegen des Bremsbelags an die Bremsscheibe.

Vorteilhafterweise legt die Feststellbremse mittels des elastischen Elements den Bremsbelag an die Bremsscheibe an. Hierunter soll verstanden werden, dass die Feststellbremse aktiviert wird und eine Veränderung, bspw. Längenänderung, erfährt. Auf Basis dieser Veränderung ist es möglich, dass die Feststellbremse eine Veränderung, bspw. Längenänderung, im elastischen Element erzeugt. Aufgrund der Charakteristik des elastischen Elements überträgt diese eine derartige Veränderung ebenfalls, wenn auch nur eingeschränkt, auf den Bremsbelag und legt diesen an die Bremsscheibe an.

Vorteilhafterweise ist das elastische Element als ein Federsystem ausgestaltet. Hierbei liefern bspw. Spiralfedern eine geeignete Federcharakteristik. In einer alternativen vorteilhaften Ausgestaltung kann neben einer linearen auch eine progressive sowie stufenförmige Federcharakteristik eingesetzt werden. Insbesondere sind weiche Federn, bzw. Federpakete vorteilhaft, um eine Entkopplung zu gewährleisten. Weiterhin sind mehrere Federn auch zu einem Gesamtsystem kombinierbar, wobei die Federkennwerte der Einzelfedern entsprechend in die Charakteristik des Gesamtsystems mit einfließen.

In einer vorteilhaften Ausgestaltung der Bremsvorrichtung ist das elastische Element zwischen der Spindelmutter der Feststellbremse und dem Bremskolben angeordnet. Hierbei erfolgt durch die Spindelmutter eine Übertragung der Bewegung und/oder der Kraft des elektromechanischen Bremsaktuators der Feststellbremse auf das elastische Element in axialer Richtung zur Spindel der Feststellbremse.

Vorteilhafterweise ist die Bremsvorrichtung ausgebildet verschiedene Zustände einzunehmen, wobei in einem ersten Zustand keine Kraft auf die Bremsscheibe übertragen wird und in einem zweiten Zustand mittels des elastischen Elements eine, insbesondere geringe, Kraft auf die Bremsscheibe übertragen wird und in einem dritten Zustand mittels einer geometrischen Verbindung eine Kraft auf die Bremsscheibe übertragen wird.

Hierunter wird verstanden, dass in einem ersten Zustand der Bremsvorrichtung hinsichtlich einer Kraftübertragung eine Entkopplung zwischen dem Aktuator und der Bremsscheibe vorliegt. Diese Kraftübertragung bezieht sich vorteilhafterweise auch auf Kräfte, die bspw. durch eine Komponentenverlagerung entstehen. Aufgrund der Entkopplung werden keine Kräfte von dem Aktuator auf die Bremsscheibe sowie auch keine Kräfte von der Bremsscheibe auf den Aktuator übertragen.

In einem dritten Zustand ist eine geometrische Verbindung - auch starre oder nicht-elastische Verbindung genannt -zwischen der Bremsscheibe und dem Aktuator vorliegend. Mittels dieser geometrischen Verbindung wird die elastische Eigenschaft des elastischen Elements ausgeschalten. Durch diese Verbindung können daher ebenfalls Kräfte sowie Bewegungen übertragen werden; eine Übertragung erfolgt allerdings ohne wesentliche Verringerung der Ausprägung der Kraft oder der Bewegung. Diese Verbindung kann indirekt mittels mehrere Komponenten erfolgen. Die geometrische Verbindung ist bspw. durch einen direkten Kontakt zweier im Wesentlichen nicht-elastischen Komponenten als nicht-elastisch anzusehen.

Auch bei Vorliegen einer elastischen Komponente kann eine geometrische Verbindung durch eine Überbrückung der elastischen Komponente - bspw. mittels einer geometrische Ausgestaltung von zur elastischen Komponente benachbarter Komponenten - ausgebildet sein. Vorteilhaft wird die geometrische Verbindung dabei mittels einer formschlüssigen Verbindung nicht-elastischer Komponenten, bspw. einer Spindelmutter und eines Bremskolben, ausgebildet. Hierunter wird verstanden, dass die Spindelmutter und der Bremskolben direkten Kontakt zur Übertragung einer Bewegung, bzw. einer Kraft in axialer Richtung aufweisen.

Ebenfalls kann eine geometrische Verbindung auch über eine elastische Komponente zustande kommen, wenn die elastische Komponente so geschalten wird, dass diese ihre elastischen Eigenschaften verliert, bspw. durch Blockbildung der elastischen Komponente. Unter einer Blockbildung soll verstanden werden, wenn eine weitere Verformung - und damit weitere Elastizität - insbesondere aufgrund geometrischer Restriktionen nicht mehr möglich ist. Beispielhaft soll auf eine Spiralfeder verwiesen werden, welche "auf Block" liegt, bzw. gefahren ist, sobald die Federwindungen aufeinander liegen und daher keine weitere federnde Eigenschaft mehr zum Tragen kommt.

Vorteilhafterweise ist jedoch in einem zweiten Zustand, welcher zwischen dem ersten und dem dritten Zustand durchlaufen wird, aufgrund des elastischen Elements, insbesondere mittels einer weichen Feder, eine teilweise Übertragung von Kräften zwischen dem Aktuator und der Bremsscheibe ermöglicht. Vorteilhaft ist das elastische Element derart ausgebildet, dass eine Übertragung einer, insbesondere axialen, Bewegung und/oder Kraft von der Feststellbremse auf die Bremsscheibe ermöglicht wird sowie eine Übertragung einer, insbesondere axialen, Bewegung und/oder Kraft von der Bremsscheibe auf die Feststellbremse unterbunden wird. Hierdurch kann eine negative Beeinflussung - bspw. mechanische Belastung der Feststellbremse oder auch Fahrerdiskomfort durch übertragenen Bremsschlag oder Geräusche - vermieden werden. Gleichzeitig wird allerdings eine Vorbereitung einer Bremsung, im Sinne eines "Brake Prefill", ermöglicht und damit eine sicherheitsrelevante Funktion dargestellt.

Hierunter ist zu verstehen, dass eine mittels des elastischen Elements übertragene Kraft zwischen der Feststellbremse und dem Bremskolben groß genug ist, um eine Bewegung und/oder eine Kraft der Feststellbremse auf den Bremskolben und/oder den Bremsbelag zu übertragen, insbesondere um mittels des Bremskolbens den Bremsbelag an die Bremsscheibe anzulegen und/oder um ein Vorfüllen eines hydraulischen Raums des Bremszylindergehäuses zu ermöglichen. Weiterhin ist die übertragene Kraft klein genug, um eine Übertragung einer Bewegung und/oder einer Kraft des Bremsbelags und/oder des Bremskolbens auf die Feststellbremse zu vermeiden, insbesondere um eine Übertragung eines Bremsschlags einer Bremsscheibe mittels des Bremsbelags sowie des Bremskolbens auf die Feststellbremse zu vermeiden.

Ferner ist ein Verfahren zur Ansteuerung einer Bremsvorrichtung für ein Kraftfahrzeug gemäß Anspruch 8 vorgesehen.

Unter einem Anlegen soll verstanden werden, dass ein Lüftspiel zwischen Bremsbelag, bzw. Bremsbelägen sowie Bremsscheibe im Wesentlichen überwunden wird. Insbesondere ist vorgesehen, dass das Lüftspiel vollständig überwunden wird und der Bremsbelag, bzw. die Bremsbeläge tatsächlich an der Bremsscheibe anliegen. Hierbei werden bspw. beide Bremsbeläge ausgemittelt und an die Bremsscheibe angelegt. Erfindungsgemäß kann eine Bremse des Fahrzeugs - genau genommen ein Bremsaktuator einer Bremse des Fahrzeugs - mittels einem zwischen dem Bremsaktuator und der Bremsscheibe befindlichen elastischen Element den Bremsbelag an die Bremsscheibe anlegen, ohne jedoch eine Bremskraft aufzubauen oder zu einer sonstige, insbesondere kräftebezogene, Beeinflussung zwischen der Bremsscheibe und dem Bremsaktuator zu führen.

Vorteilhafterweise umschließt das Verfahren dabei ein Verfahren zur Ansteuerung einer Feststellbremse sowie ein Verfahren zur Ansteuerung einer Betriebsbremse. Die Ansteuerung der Bremsvorrichtung bezieht sich dabei vorteilhafterweise sowohl auf die Ansteuerung des Aktuator, als auch bspw. auf die Ansteuerung von Ventilen bei einem hydraulischen System. Vorteilhafterweise erfolgt das Anlegen der Bremsbeläge mittels einer Ansteuerung einer Feststellbremse.

Das Verfahren wird vorteilhafterweise bei Vorliegen eines definierten Betriebszustandes des Kraftfahrzeugs gestartet. Ein derartiger Betriebszustand kann bspw. auf Basis mittels Sensoren erfasster Daten bestimmt werden. Derartige Daten beziehen sich bspw. auf Umfelddaten (bspw. detektierte Fußgänger) und/oder Fahrzeugdaten (bspw. vorliegende Beschleunigung/ Verzögerung) und/oder Daten des Fahrers (bspw. Ablenkung). Bspw. kann eine potentielle Notbremssituation eine derartige Betriebssituation darstellen. Ebenso kann allerdings das Verfahren auch vorteilhaft durchgehend dann angewendet werden, wenn schnelle Reaktionen erfoderlich sind, bspw. während einem autonomen Fahrmanöver.

Vorteilhafterweise erfolgt die Ansteuerung der Feststellbremse im Rahmen des Verfahrens mittels einer Wegsteuerung. Mittels der Wegsteuerung wird ein Weg definiert, den der Aktor beim Zuspannen der Feststellbremse überwindet. Bei der Wegsteuerung der Feststellbremse wird wenigstens ein Gesamtlöseweg und ein Kraftlöseweg berücksichtigt, wobei der Kraftlöseweg eine Zangensteifigkeit sowie eine Klemmkraft berücksichtigt, wobei insbesondere die Zangensteifigkeit im Rahmen eines zuletzt durchgeführten Feststellbremsvorgangs ermittelt wird, und wobei insbesondere die Klemmkraft einer zuletzt eingestellten Klemmkraft entspricht.

Die Zangensteifigkeit kann auch vorteilhafterweise während mehrerer Verriegelungen gemessen und in geeigneter Weise gemittelt werden. Der Kraftaufbau zwischen einer ersten Kraft (z.B. 0 kN bei vollständig gelöster Bremse) sowie einer definierten zweiten Kraft (z.B. 12 kN) wird als Delta F beschreiben. Hieraus ergibt sich Delta F = Zangensteifigkeit * Kraftlöseweg. Bei einer Zangensteifigkeit von bspw. 30 kN/mm ergibt sich ein Kraftlöseweg von 0,4 mm. Der Gesamtlöseweg ist bspw. immer gleich groß eingestellt. Bei einem angenommenen Gesamtlöseweg s2 von bspw. 1,4 mm ergibt sich ein Leerweg von 1 mm, wobei die Differenz aus Gesamtlöseweg und Kraftlöseweg den Leerweg definiert (Leerweg = Gesamtlöseweg - Kraftlöseweg).

Aufgrund möglicher Störgrößen, wie z.B. thermische Relaxation, Nachspannen, Verriegelung unter Druck oder Toleranzen in der Messtechnik kann es zu unterschiedlichen Auswirkungen kommen: Bspw. wird mittels der Wegsteuerung ein zu geringer Weg eingestellt. Zu gering bedeutet in diesem Fall, dass der Bremskolben zumindest teilweise aus dem Gehäuse geschoben wird, wobei ein tatsächliches Anliegen der Bremsbeläge an der Bremsscheibe nicht sichergestellt ist. Aufgrund der Wegsteuerung sowie der definierten durchfahrenen Wegstrecke kann allerdings trotzdem davon ausgegangen werden, dass das Lüftspiel im Wesentlichen überwunden ist. Alternativ kann auch eine Kraftschätzung angewendet werden, um ein tatsächliches Anliegen zu detektieren. Weiterhin ist möglicherweise ein zu großer Weg bei einer Wegsteuerung eingestellt. Da hier die Feder wirksam wird, ist eine derartige Auswirkung relativ unkritisch. Es ist jedoch vorteilhaft vorgesehen, einen ausreichenden Federarbeitsweg für einen derartigen Fall vorzuhalten.

Ein Betriebsbremsvorgang weist wenigstens zwei Phasen auf, wobei in einer ersten Phase des Betriebsbremsvorgangs keine Kraft von dem Aktuator der Betriebsbremse auf die Bremsscheibe übertragen wird, und in einer zweiten Phase des Betriebsbremsvorgangs eine Kraft von dem Aktuator der Betriebsbremse auf die Bremsscheibe übertragen wird. Eine Kraft wird bspw. hydraulisch übertragen werden. Die übertragene Kraft erzeugt insbesondere eine Reibkraft und/oder eine Klemmkraft zwischen dem Bremsbelag und der Bremsscheibe, welche wiederum zu einer auf das Kraftfahrzeug wirkenden Bremskraft und/oder Haltekraft führt. Die erste und zweite Phase beschreiben dabei eine zeitliche Reihenfolge eines Bremsvorgangs. Vorteilhafterweise wird mittels der Ansteuerung der Feststellbremse die erste Phase des Betriebsbremsvorgangs verkürzt, insbesondere überwunden.

Weiterhin kann ein Feststellbremsvorgang wenigstens drei Phasen aufweisen, wobei in einer ersten Phase des Feststellbremsvorgangs keine Kraft von der Feststellbremse auf die Bremsscheibe übertragen wird und in einer zweiten Phase des Feststellbremsvorgangs über das elastischen Element eine Kraft von der Feststellbremse auf die Bremsscheibe übertragen wird und in einer dritten Phase des Feststellbremsvorgangs eine Kraft mittels einer geometrischen Verbindung von der Feststellbremse auf die Bremsscheibe übertragen wird. Unter einer geometrischen Verbindung wird eine starre, d.h. nicht-elastische Verbindung mindestens zweier Komonenten verstanden. Vorteilhafterweise wird die Feststellbremse in der ersten und der zweiten Phase des Feststellbremsvorgangs betrieben um die erste Phase des Betriebsbremsvorgangs zu verkürzen, insbesondere zu überwinden. Eine Kraft kann bspw. aufgrund der Verlagerung einer Komponente, bspw. der Spindelmutter, übertragen werden sowie aufgrund einer Verformung einer Komponente, bspw. des elastischen Elements, entstehen.

Vorteilhaft weist das Verfahren zur Ansteuerung der Bremsvorrichtung mindestens 4 Schritte auf, wobei in einem ersten Schritt die Feststellbremse aktiviert wird und in einem zweiten Schritt aufgrund einer durch die Aktivierung veranlassten Veränderung der Feststellbremse, insbesondere Bewegung einer elektromechanischen Einrichtung, das elastische Element an den Bremskolben angelegt wird und in einem dritten Schritt aufgrund einer weiteren durch die Aktivierung veranlassten Veränderung der Feststellbremse, insbesondere weiteren Bewegung einer elektromechanischen Einrichtung, das elastische Element derart unter Spannung gesetzt wird, dass die entstehende Kraft den Bremskolben verschiebt und in einem vierten Schritt eine weitere Veränderung der Feststellbremse, insbesondere weitere Bewegung einer elektromechanischen Einrichtung, verhindert wird. Vorteilhaft erfolgt die Verhinderung der weiteren Bewegung in dem vierten Schritt zu dem Zeitpunkt, sobald der durch den Bremskolben verschobene Bremsbelag an der Bremsscheibe angelegt wurde oder als angelegt gilt. Hierfür kann eine Wegsteuerung verwendet werden. Die beschriebenen Schritte des Verfahrens beschreiben auch eine zeitliche Reihenfolge.

Vorteilhaft weist das Verfahren zur Ansteuerung der Bremsvorrichtung einen weiteren fünften Schritt auf, bei welchem aufgrund einer weiteren durch die Aktivierung veranlassten Veränderung der Feststellbremse, insbesondere Bewegung einer elektromechanischen Einrichtung, keine elastischen Eigenschaften im elastischen Element mehr vorliegen. Das elastische System wird hierfür überbrückt. Bspw. wird eine Feder "auf Block" gefahren oder es wird durch die Bewegung eine sonstige geometrische, insbesondere formschlüssige, Verbindung weiterer Komponenten, bspw. der Spindelmutter und des Bremskolbens erzielt.

Vorteilhafterweise zeichnet sich das Verfahren zur Ansteuerung der Bremsvorrichtung dadurch aus, dass eine Aktivierung der Ansteuerung der Feststellbremse aufgrund einer Anforderung durch eine spezifische Fahrfunktion erfolgt und/oder eine Aktivierung der Ansteuerung der Feststellbremse automatisch bei einer spezifischen Fahrsituation erfolgt und/oder eine Deaktivierung des ersten Betriebsmodus der Feststellbremse automatisch bei Wegfall einer spezifischen Fahrfunktion erfolgt und/oder eine Deaktivierung des ersten Betriebsmodus der Feststellbremse automatisch bei Wegfall einer spezifischen Fahrsituation erfolgt. Weiterhin kann vorteilhaft eine durch den Fahrer gesteuerte Aktivierung und/oder Deaktivierung erfolgen.

Ferner ist ein Steuergerät vorgesehen, welches ausgebildet, das heißt eingerichtet, ist und Mittel aufweist das beschriebene Verfahren durchzuführen.

Weiterhin ist vorteilhaft vorgesehen, dass die Feststellbremse ein "motor on caliper" Bremssystem ist.

Weitere Merkmale und Zweckmäßigkeit der Erfindung ergeben sich aus der Beschreibung von Ausführungsbeispielen anhand der beigefügten Figuren.

Von den Figuren zeigt:
Fig. 1 als Stand der Technik eine schematische Schnittansicht einer Bremsvorrichtung mit einer automatischen Feststellbremse in "motor on caliper" Bauweise;
Fig. 2 eine Bremsvorrichtung mit einem Federsystem zwischen Spindelmutter und Bremskolben in einer möglichen Anordnung des Federsystems;
Fig. 3a-3d einen Ablauf einer Ansteuerung der Feststellbremse sowie dessen Auswirkungen; und
Fig. 4 eine Bremsvorrichtung mit einer alternativen Anordnung des Federsystems; und
Fig. 5 eine Bremsvorrichtung mit einem Federsystem, welches nicht wirksam geschalten ist; und
Fig. 6 eine Bremsvorrichtung mit einem Federsystem, welches in einer alternativen Ausführung nicht wirksam geschalten ist.

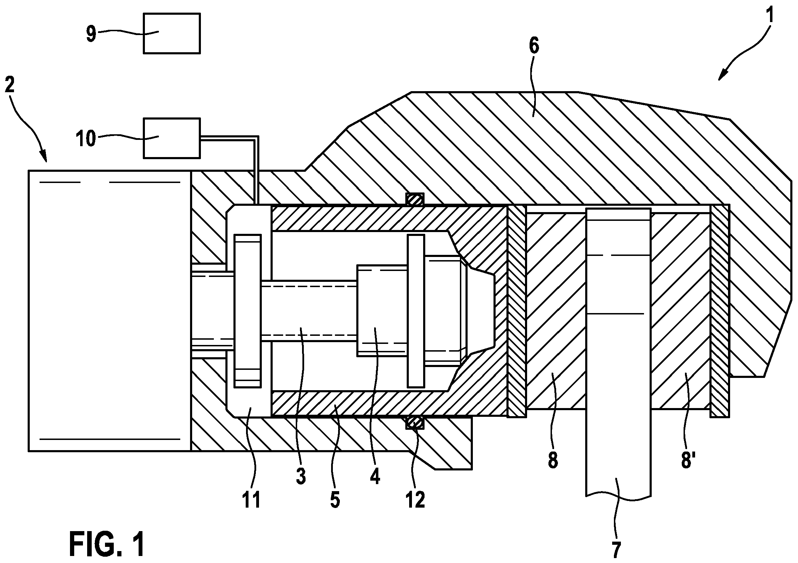

Fig. 1 zeigt gemäß dem Stand der Technik eine schematische Schnittansicht einer Bremsvorrichtung 1 für ein Fahrzeug. Die Bremsvorrichtung 1 weist dabei eine automatisierte (automatische) Feststellbremse (Parkbremse) auf, die mittels eines Aktuators 2 (Bremsmotor), der vorliegend als Gleichstrommotor ausgebildet ist, eine Klemmkraft zum Festsetzen des Fahrzeugs ausüben kann. Der Aktuator 2 der Feststellbremse treibt hierfür eine in einer axialen Richtung gelagerte Spindel 3, insbesondere eine Gewindespindel 3, an. An ihrem dem Aktuator 2 abgewandten Ende ist die Spindel 3 mit einer Spindelmutter 4 versehen, die im zugespannten Zustand der automatisierten Feststellbremse an dem Bremskolbens 5 anliegt. Die Feststellbremse übertragt auf diese Weise elektromechanisch eine Kraft auf die Bremsbeläge (8, 8'), bzw. die Bremsscheibe (7).

Die Spindelmutter liegt dabei an einer inneren Stirnseite des Bremskolbens 5 (auch Rückseite des Bremskolbenbodens oder innerer Kolbenboden genannt) an. Fig. 1 zeigt ein Anliegen an einer - als torusförmige Verbindungsfläche ausgestalteten - inneren Stirnseite des Bremskolbens 5, welche eine innere Bodenfläche sowie inneren Seitenflächen des Bremskolbens 5 verbindet. Alternativ ist auch ein Anliegen an der inneren Bodenfläche oder einer sonstigen Ausformung des Bremskolbens 5 denkbar. Die Spindelmutter 4 wird bei einer Drehbewegung des Aktuators 2 und einer resultierenden Drehbewegung der Spindel 3 in der axialen Richtung verschoben. Die Spindelmutter 4 und der Bremskolben 5 sind in einem Bremssattel 6 gelagert, der eine Bremsscheibe 7 zangenartig übergreift.

Zu beiden Seiten der Bremsscheibe 7 ist jeweils ein Bremsbelag 8, 8' angeordnet. Im Fall eines Zuspannvorgangs der Bremsvorrichtung 1 mittels der automatisierten Feststellbremse dreht sich der Elektromotor (Aktuator 2), woraufhin die Spindelmutter 4 sowie der Bremskolben 5 in der axialen Richtung auf die Bremsscheibe 7 zubewegt werden, um so eine vorbestimmte Klemmkraft zwischen den Bremsbelägen 8, 8' und der Bremsscheibe 7 zu erzeugen.

Die automatisierten Feststellbremse ist bspw. wie abgebildet als "motor on caliper" System ausgebildet und mit der Betriebsbremse kombiniert. Man könnte diese auch als in das System der Betriebsbremse integriert ansehen. Sowohl die automatisierte Feststellbremse als auch die Betriebsbremse greifen dabei auf den selben Bremskolben 5 sowie den selben Bremssattel 6 zu, um eine Bremskraft auf die Bremscheibe 7 aufzubauen. Die Betriebsbremse besitzt jedoch einen separaten Aktuator 10. Die Betriebsbremse ist in Fig. 1 als hydraulisches System ausgestaltet, wobei der Aktuator 10 durch die ESP-Pumpe dargestellt wird. Bei einer Betriebsbremsung wird eine vorbestimmte Klemmkraft zwischen den Bremsbelägen 8, 8' und der Bremsscheibe 7 hydraulisch aufgebaut. Zum Aufbau einer Bremskraft mittels der hydraulischen Betriebsbremse wird ein Medium 11, insbesondere eine im Wesentlich inkompressibles Bremsflüssigkeit 11, in einen durch den Bremskolben 5 und den Bremssattel 6 begrenzten Fluidraum gepresst. Der Bremskolben 5 ist hierfür gegenüber der Umgebung mittels einem Kolbendichtring 12 abgedichtet.

Die Ansteuerung der Bremsaktuatoren 2 und 10 erfolgt mittels einer Endstufe, d.h. mittels einem Steuergerät 9, bei dem es sich bspw. um ein Steuergerät eines Fahrdynamiksystems, wie ESP (elektronisches Stabilitätsprogramm) oder ein sonstiges Steuergerät handeln kann.

Bei einer Ansteuerung der automatisierten Feststellbremse müssen zuerst der Leerweg bzw. das Lüftspiel überwunden werden, bevor eine Bremskraft aufgebaut werden kann. Dies gilt in analoger Weise auch für die Betriebsbremse. Als Leerweg wird bspw. der Abstand bezeichnet, den die Spindelmutter 4 durch die Rotation der Spindel 3 überwinden muss, um in Kontakt mit dem Bremskolben 5 zu gelangen. Als Lüftspiel wird der Abstand zwischen den Bremsbelägen 8, 8' und der Bremsscheibe 7 bei Scheibenbremsanlagen von Kraftfahrzeugen bezeichnet. Dieser Vorgang dauert in Bezug auf die Gesamtansteuerung, insbesondere bei der automatisierten Feststellbremse, in der Regel relativ lang. Am Ende einer derartigen Vorbereitungsphase sind die Bremsbeläge 8, 8' an die Bremsscheibe 7 angelegt und der Kraftaufbau beginnt bei einer weiteren Ansteuerung. Beim Anlegen der Bremsbeläge 8, 8' ist es daher im Sinne dieser Erfindung wichtig keine Bremskräft aufzuprägen, bzw. die bei einem Anlegen aufgeprägte Bremskraft so gering wie möglich einzustellen, um keinen ungewünschten verfrühten Bremseffekt zu produzieren. Fig. 1 zeigt den Zustand des bereits überwundenen Leerwegs und Lüftspiels. Hierbei sind die Bremsbeläge 8, 8' an die Bremsscheibe 7 angelegt und sämtliche Bremsen, d.h. die Feststellbremse als auch die Betriebsbremse, können bei einer folgenden Ansteuerung sofort eine Bremskraft an dem entsprechenden Rad aufbauen.

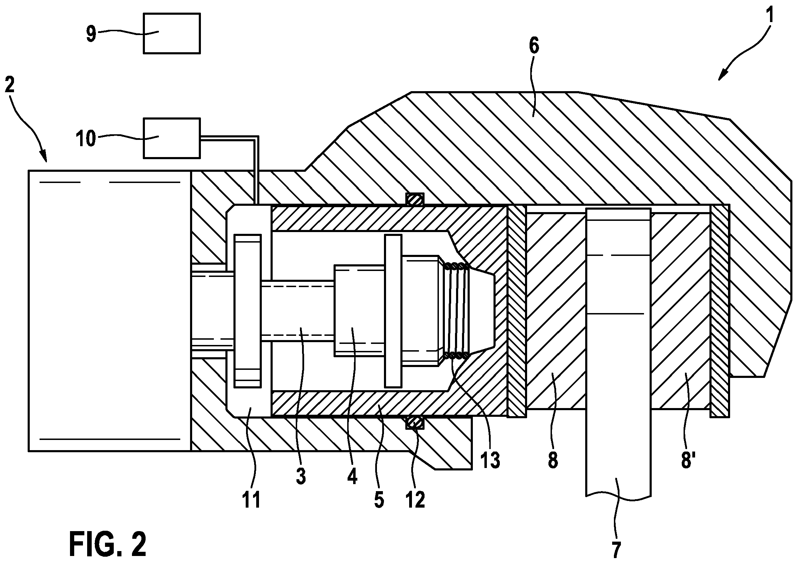

Fig. 2 zeigt eine erfindungsgemäße Ausgestaltung einer Bremsvorrichtung 1 mit einem elastischen Element 13 in einer möglichen ersten Anordnung des elastischen Elements 13. Ansonsten ist die Bremsvorrichtung sehr ähnlich zu der in Fig. 1 beschriebenen Bremsvorrichtung ausgestaltet. Das elastische Element 13 ist in Fig. 2 als Federsystem 13 augestaltet, wobei eine Spiralfeder gezeigt ist. Das Federsystem 13 ist zwischen der Spindelmutter 4 und dem Bremskolben 5 angeordnet. Das Federsystem 13 kann von der Spindelmutter 4 und/oder dem Bremskolben 5 oder einer anderen Komponenten aufgenommen und/oder daran geführt sein. Diese Komponenten können eine entsprechende Ausgestaltung, bspw. eine Anlagefläche für das Federsystem 13 aufweisen. Auch kann eine feste oder eine lösliche Verbindung des Federsystems 13 mit einer oder mehreren dieser Komponenten vorgesehen sein. Derartige Ausgestaltungen sind jedoch nicht in Fig. 2 gezeigt.

Zur Überwindung des Lüftspiels zwischen Bremsscheibe 7 und Bremsbeläge 8, 8' mittels der Feststellbremse wird der Aktuator 2 sowie die Spindelmutter 4 verwendet. Hierbei wird z.B. die Spindel 3 gedreht und damit die Spindelmutter 4 axial in Richtung Bremsscheibe 7 verschoben. Die Spindelmutter 4 erzeugt dabei eine Kraft auf das Federsystem 13, welches zwischen der Spindelmutter 4 und Bremskolben 5 positioniert ist. Die Federkonstant des Federsystems 13 ist so gewählt, dass das Federsystem 13 beim Zuspannen den Bremskolben 5 in Richtung der Bremsscheibe 7 schieben kann. Hierdurch erfolgt eine Verschiebung des Bremskolbens 5 axial in Richtung der Bremsscheibe 7.

Generell ist das Federsystem 13 allerdings derart konzeptioniert, bzw. gewählt, dass dieses eine geringe Federkonstante besitzt. Hierdurch wird ermöglicht, dass nur eine geringe Kraft mittels des Federsystems 13 auf den Bremskolben 5 weitergeleitet wird.

Zum Aufbringen einer tatsächlichen Bremskraft und/oder Haltekraft mittels der Feststellbremse wird ebenfalls der Aktuator 2 der Feststellbremse sowie die Spindelmutter 4 verwendet. Hierfür ist vorgesehen, dass der Federweg des Federsystems 13 limitiert ist.

Die Ausführungsform von Fig. 2 zeigt das Federsystem 13 als unwirksam geschalten. Dies erfolgt bzw. dadurch, dass das Federsystem 13 "auf Block" gedrückt wird. Hierunter soll verstanden werden, dass die Federwindungen direkt aufeinander liegen und keine elastischen Eigenschaften im Federsystem 13 mehr vorliegen. Hierdurch entsteht eine direkte Verbindung zwischen der Spindelmutter 4 und dem Bremskolben 5. Das Federsystem 13 wird daher bei entsprechender Auslenkung der Spindelmutter, bzw. bei entsprechend wirkender Kraft, unwirksam.

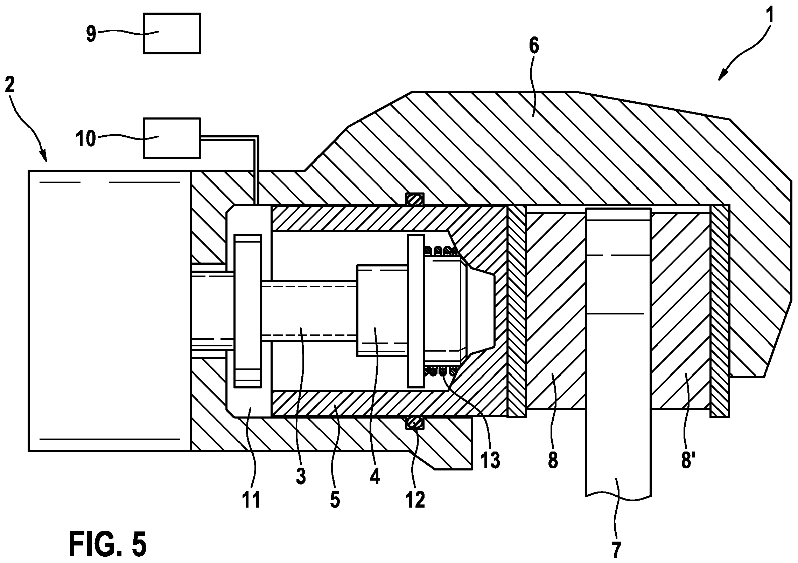

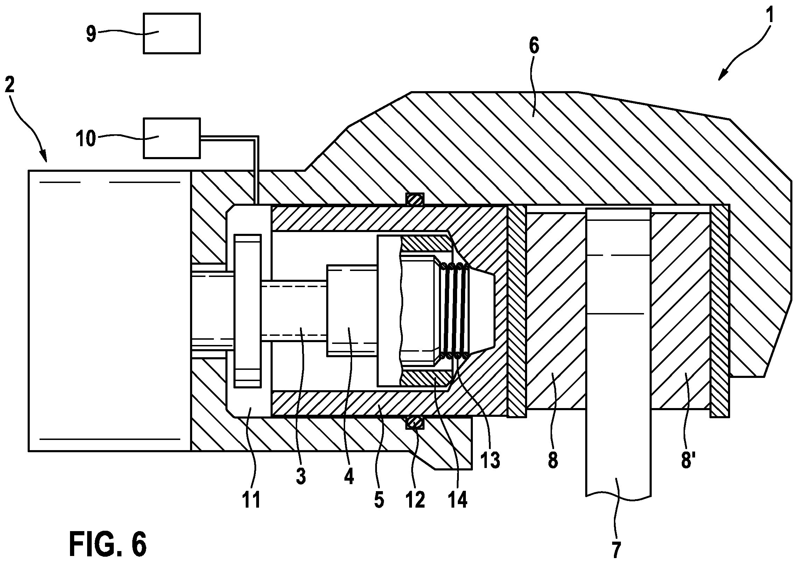

In alternativen Ausführungsformen, kann ein weiteres Zusammendrücken der Feder vermieden, bzw. eine direkte Kraftübertragung zwischen der Spindelmutter 4 und dem Bremskolben 5 auch durch eine abgestimmte Dimensionierung und Anordnung des Federsystems 13 (wie in Fig. 5 gezeigt). Auch kann eine nicht-elastische Verbindung mittels einer geometrische Ausgestaltung (bspw. einer Absützung 14) der Spindelmutter 4 und/oder des inneren Bodens des Bremskolben 5 ermöglicht werden(wie in Fig. 6 gezeigt).

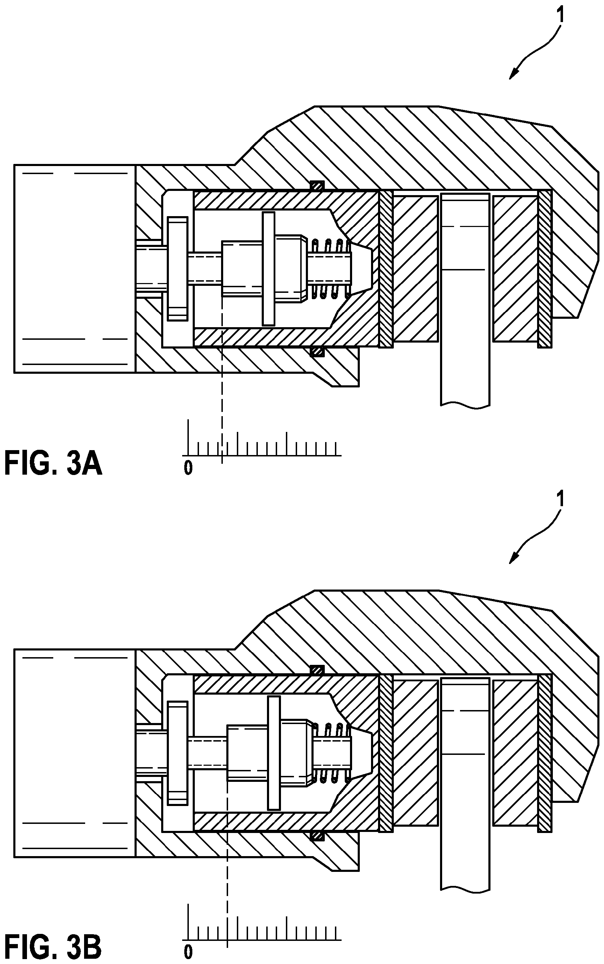

Die Figuren 3a bis 3d zeigen einen Ablauf einer Ansteuerung der Feststellbremse sowie die daraus resultierenden Bewegungen der Komponenten der erfindungsgemäßen Bremsvorrichtung 1.

Fig. 3a zeigt eine Bremsvorrichtung 1 mit einer automatisierten Feststellbremse in einem regulären Betriebszustand, wobei die Feststellbremse "offen" ist, d.h. nicht für eine Bremsung vorbereitet ist. Hierunter wird verstanden, dass das Federsystem 13 nicht vorgespannt ist und der Bremskolben 5 unabhängig von der Feststellbremse arbeiten und sich bewegen kann. Die Feststellbremse ist hierbei nicht aktiviert und in einer Ruheposition dargestellt. Die Lage einer beispielhaften Ruheposition der Spindelmutter 4 ist mittels einer axialen Längenskala angedeutet. Das Federsystem 13 ist in der gezeigten Ausführung mit dem Kolbenboden des Bremskolbens 5 verbunden, bzw. liegt zumindest an diesem an. Eine weitere feste Verbindung des Federsystems 13 mit der Spindelmutter 4 liegt nicht vor. Es wirkt daher zwischen den Komponenten Spindelmutter 4 und Bremskolben 5 keine Federkraft mittels des Federsystems 13. Zwischen der Bremsscheibe 7 und den Bremsbelägen 8, 8' stellt sich ein Luftspalt ein. Das Einstellen des Luftspalts erfolgt im Wesentlichen durch den Kolbendichtring 12 zwischen dem Bremskolben 5 und dem Gehäuse des Bremssattels 6. Wenn die Betriebsbremse hydraulisch entlastet wird, wie dies in der Fig. 3a dargestellt ist, zieht der Kolbendichtring 12 den Bremskolben 5 zurück in das Gehäuse des Bremssattels 6 und baut dabei innere Kräfte ab.

Fig. 3b zeigt eine Bremsvorrichtung 1 mit einer automatisierten Feststellbremse in einem aktivierten Zustand. Eine Aktivierung wird gestartet, wenn bspw. eine Situation erkannt wird in der es von Nutzen sein könnte die Bremsaufbaudynamik zu verbessern. Der Aktuator 2 der Feststellbremse wird bei dieser Aktivierung in Richtung "Schließen" angesteuert. Hierdurch wird die Spindelmutter 4 aus ihrer Ruhelage herausbewegt, wie dies mittels der axialen Längenskala verdeutlich ist. Das Federsystem 13 kommt dabei schließlich beidseitig mit dem Kolbenboden des Bremskolbens 5 sowie der Spindelmutter 4 der Kolben-Spindel-Einheit der Feststellbremse in Kontakt. Zu diesem Zeitpunkt ist jedoch noch zwischen der Bremsscheibe 7 und den Bremsbelägen 8, 8' ein Luftspalt vorhanden.

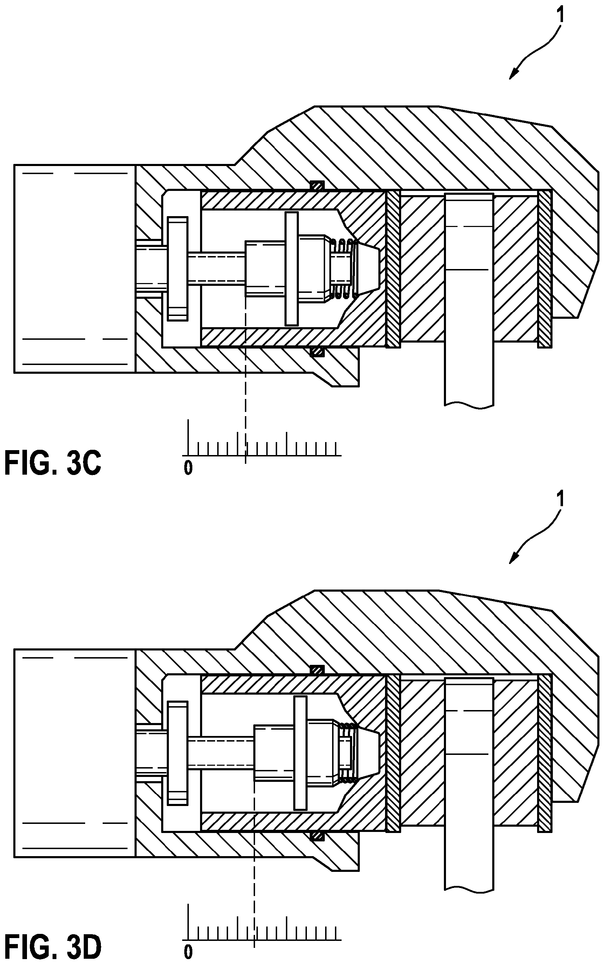

Fig. 3c zeigt eine Bremsvorrichtung mit einer automatisierten Feststellbremse in einem aktivierten Zustand, bei welchem der Luftspalt zwischen der Bremsscheibe 7 und den Bremsbelägen 8, 8' bereits geschlossen wurde. Eine im Vergleich zur Fig. 3b weitere bzw. längere Ansteuerung des Parkbremsaktuators 2 in Schließrichtung führt entsprechend dazu, dass die Spindelmutter 4 weiter aus ihrer Ruhelage herausbewegt ist, wie dies mittels der axialen Längenskala verdeutlich ist. Diese weitere Verlagerung der Spindelmutter 4 in Richtung Bremsscheibe 7 führt dazu, dass das Federsystem 13 zunehmend zusammengedrückt wird. Hierdurch wird eine Federkraft wird zwischen dem Bremskolben 5 und der Spindelmutter 4 wirksam. Da die Spindelmutter 4 über die Spindel 3 am Gehäuse des Bremssattels 6 abgestützt ist (nicht in Figuren 3a - 3d gezeigt), bewegt sich der Bremskolben 5 in Richtung der Bremsscheibe 7, sobald die Federkraft größer ist als die Gegenkraft, die durch den Dichtring 12 des Bremskolbens 5 bereitgestellt wird. Eine typische Kraft zum Bewegen des Bremskolbens liegt bei einem Druckäquivalent von ca 3 bar. Die Ansteuerung des Parkbremsaktuator 2 wird beendet, wenn bspw. das Lüftspiel zwischen der Bremsscheibe 7 und den Bremsbelägen 8, 8' minimiert ist, bzw. aufgehoben ist, d.h. die Brembeläge an die Bremsscheibe angelegt sind oder als angelegt gelten. Eine derartige Ansteuerung sowie Abschaltung des Parkbremsaktuators 2 kann bspw. wegabhängig erfolgen.

Durch das Verschieben des Bremskolbens 5 wird zunächst der hydraulische Raum, welcher sich zwischen Bremssattel 6 und Bremskolben 5 ergibt, etwas vergrößert. Weiterhin entsteht hierdurch ein leichter Unterdruck. Durch den Unterdruck wird automatisch über die Bremsleitungen Bremsflüssigkeit 11 aus einem Reservoir nachgesaugt, bis kein Unterdruck mehr vorliegt. Das Reservoir kann bspw. in einem Gehäuse mit dem hydraulischen Aktuator 10 (ESP-Pumpe) der hydraulischen Betriebsbremse, ausgebildet sein. Ebenfalls erfolgt eine geeignete Steuerung der Ventile (nicht in Figuren dargestellt) des hydraulischen Systems der Betriebsbremse, insbesondere um ein Nachsaugen der Bremsflüssigkeit 11 aus dem Reservoir zu ermöglichen.

Wird in diesem Zustand, in dem ein Lüftspiel minimiert sowie auch das hydraulische System bereits für eine Bremsung vorbereitet ist, ein weiterer Druck angefordert, so wird durch das Verschieben der Flüssigkeitssäule mittels des hydraulischen Aktors 10 der Betriebsbremse, bspw. der ESP-Pumpe, keine bzw. deutlich weniger zusätzliche Bremsflüssigkeit 11 benötigt, um den Bremskolben 5 in Kontakt mit den Bremsbelägen 8, 8' zu bringen, bzw. die Bremsbeläge 8, 8' an die Bremsscheibe 7 anzulegen und um eine Bremskraft aufzubauen. Ein Verschieben der Flüssigkeitssäule führt daher beinnahe unmittelbar zu einem Druckaufbau über den Bremssattel 6 und damit zu einem schnell bereitgestellten Bremsmoment. Der Anhalteweg des Fahrzeugs lässt sich damit verrringern.

Weiterhin wird in dem in Fig. 3b und Fig. 3c dargestellten Zustand , d.h. solange sich das Fahrzeug noch in einem unbebremsten Zustand befindet, durch das Federsystem 13 eine Bewegung des Bremskolbens 5 bspw. in Reaktion auf einen vorhandenen Bremsscheibenschlag ermöglicht. Hierdurch wird ein unerwünschtes, insbesondere ein unnötig hohes, Bremsmoment vermieden. Das Federsystem 13 ermöglicht damit insbesondere eine Entkopplung des Aktuators 2 der Feststellbremse von der Bremsscheibe 7.

Fig. 3d zeigt eine Bremsvorrichtung mit einer automatisierten Feststellbremse in einem Zustand, bei welchem eine direkte Kraftübertragung von der Spindelmutter 4 auf den Bremskolben 5 ermöglicht wird. Soll die Feststellbremse geschlossen werden, so wird der Aktuator 2 der Feststellbremse in bekannter Art und Weise weiter angesteuert und die Spindelmutter 4 weiter aus ihrer Ruhelage herausbewegt ist, wie dies mittels der axialen Längenskala verdeutlich ist. Das Federsystem 13 wird weiter zusammengedrückt, bis die Elemente des Federsystems 13 "auf Block" sind und damit nicht mehr wirksam sind. Hierdurch wird eine direkte Kraftübertragung von der Spindelmutter 4 auf den Bremskolben 5 ermöglicht. Aufgrund dessen, dass das Federsystem 13 "auf Block" liegt, ergibt sich eine indirekte Verbindung zwischen dem Spindelmutter 4 und dem Bremskolben 5 über das auf Block liegende Federsystem 13.

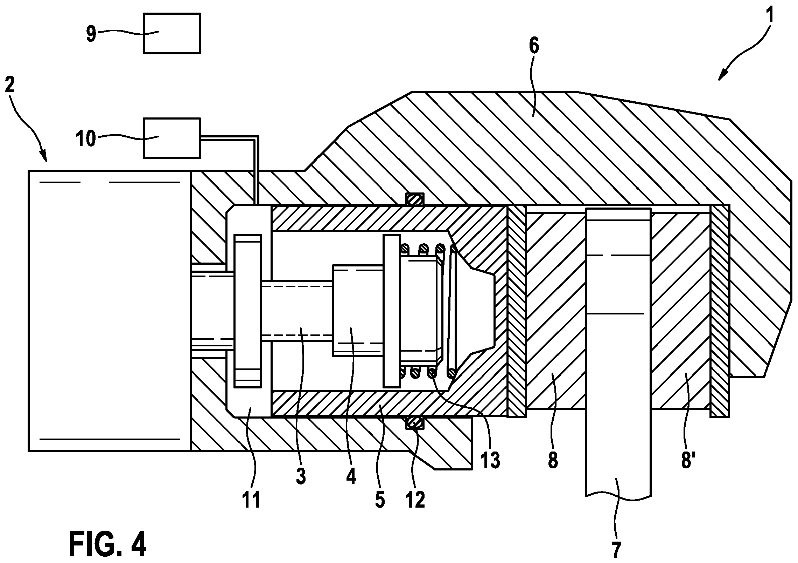

Fig. 4 zeigt eine Bremsvorrichtung mit einer alternativen Anordnung des Federsystems 13 zwischen der Spindelmutter 4 und dem Bremskolben 5. Das Federsystem 13 ist ebenfalls als Spiralfeder ausgestaltet. Hierbei erfolgte eine abgestimmte Dimensionierung und Anordnung des Federsystems 13 sowie geometrische Ausgestaltung der Spindelmutter 4 und der inneren Stirnseite des Bremskolben 5 dergestalt, dass ab einer bestimmten Verlagerung der Spindelmutter aus der Ruhelage ein weiteres Zusammendrücken der Feder vermieden wird und eine direkte Kraftübertragung zwischen der Spindelmutter 4 und dem Bremskolben 5 ermöglicht wird. Im Gegensatz zu Fig. 3d wird das Federsystem 13 hierbei nicht auf Block gefahren, um eine direkte Kraftübertragung zu ermöglichen. Fig. 5 zeigt hierbei eine Ausgestaltung, bei welcher eine direkte Verbindung zwischen Spindelmutter 4 und Bremskolben 5 ausgebildet ist, ohne die Feder auf Block zu fahren. Darüber hinaus sind weitere Alternativen zur Anordnung des Federsystems möglich, um einen gleichen Effekt zu erzielen, bspw. eine direkte Anordnung des Federsystem zwischen der inneren Bodenfläche des Bremskolbens 5 und der zur inneren Bodenfläche des Bremskolbens 5 weisende Stirnfläche der Spindelmutter 4.

Fig. 6 zeigt eine Bremsvorrichtung mit einer ähnlichen Anordnung des Federsystems zwischen der Spindelmutter 4 und dem Bremskolben 5 wie in Fig. 2. Der Unterschied in Fig. 6 ist jedoch, dass die Spindelmutter 4 eine Abstützung 14 aufweist. Aufgrund der geometrische Ausgestaltung der Spindelmutter 4 - bzw. der Abstützung 14 - und der inneren Stirnseite des Bremskolben 5 wird ab einer bestimmten Verlagerung der Spindelmutter aus der Ruhelage ein weiteres Zusammendrücken der Feder vermieden und eine direkte Kraftübertragung zwischen der Spindelmutter 4 und dem Bremskolben 5 ermöglicht. In der Sprache der vorliegenden Schrift entsteht hierbei eine geometrische Verbindung der beiden Komponenten Spindelmutter 4 und Bremskolben 5 durch ein direktes Aneinanderliegend der beiden Komponenten. Diese geometrische Verbindung ist aufgrund der beiden im Wesentlichen nicht-elastischen Komponenten Spindelmutter 4 und Bremskolben 5 als nicht-elastisch anzusehen. Das Federsystem13 ist in dieser Verlagerung, wie auch in der Verlagerung aus Fig. 5 nicht mehr, bzw. nur untergeordnet und unterstützend, wirksam.

## Patentansprüche

1. Bremsvorrichtung (1) für ein Kraftfahrzeug, welche eine Betriebsbremse und eine automatisierte Feststellbremse aufweist sowie mindestens einen Bremsbelag (8, 8') und eine Bremsscheibe (7) umfasst, wobei der Bremsbelag (8, 8') an die Bremsscheibe (7) anlegbar ist, **dadurch gekennzeichnet, dass** aufgrund einer Aktuierung der Feststellbremse der Bremsbelag (8, 8') mittels eines elastischen Elements (13) dergestalt an die Bremsscheibe (7) anlegbar ist, dass keine oder nur eine geringe auf das Kraftfahrzeug wirkende Bremskraft aufgebaut wird.

2. Bremsvorrichtung (1) für ein Kraftfahrzeug gemäß Anspruch 1, **dadurch gekennzeichnet, dass** die Feststellbremse mittels des elastischen Elements (13) den Bremsbelag (8, 8') an die Bremsscheibe (7) anlegt.

3. Bremsvorrichtung (1) für ein Kraftfahrzeug gemäß Anspruch 1, **dadurch gekennzeichnet, dass** das elastische Element (13) als ein Federsystem (13) ausgestaltet ist, welches insbesondere zwischen einer Spindelmutter (4) der Feststellbremse und einem Bremskolben (5') angeordnet ist.

4. Bremsvorrichtung (1) für ein Kraftfahrzeug gemäß Anspruch 1, **dadurch gekennzeichnet, dass** die Bremsvorrichtung (1) ausgebildet ist verschiedene Zustände einzunehmen, wobei
• in einem ersten Zustand keine Kraft auf die Bremsscheibe (7) übertragen wird und
• in einem zweiten Zustand mittels des elastischen Elements (13) eine, insbesondere geringe, Kraft auf die Bremsscheibe (7) übertragen wird und
• in einem dritten Zustand mittels einer geometrischen Verbindung eine Kraft auf die Bremsscheibe (7) übertragen wird.

5. Bremsvorrichtung (1) für ein Kraftfahrzeug gemäß Anspruch 1, **dadurch gekennzeichnet, dass** das elastische Element (13) derart ausgebildet ist, dass eine Übertragung einer, insbesondere axialen, Bewegung und/oder Kraft von der Feststellbremse auf die Bremsscheibe (7) ermöglicht wird sowie eine Übertragung einer, insbesondere axialen, Bewegung und/oder Kraft von der Bremsscheibe (7) auf die Feststellbremse unterbunden wird.

6. Verfahren zur Ansteuerung einer Bremsvorrichtung (1) für ein Kraftfahrzeug, welche mindestens einen Bremsaktuator (2, 10) enthält, wobei die Bremsvorrichtung (1) über mindestens einen Bremsbelag (8, 8') und eine Bremsscheibe (7) verfügt, **wobei** der Bremsbelag (8, 8') mittels eines elastischen Elements (13) an die Bremsscheibe (7) angelegt wird, **dadurch gekennzeichnet, dass** das Anlegen der Bremsbeläge (8, 8') mittels einer Ansteuerung einer Feststellbremse dergestalt erfolgt, dass keine oder nur eine geringe auf das Kraftfahrzeug wirkende Bremskraft aufgebaut wird.

7. Verfahren zur Ansteuerung einer Bremsvorrichtung (1) gemäß Anspruch 6, **dadurch gekennzeichnet, dass** die Ansteuerung der Feststellbremse mittels einer Wegsteuerung erfolgt.

8. Verfahren zur Ansteuerung einer Bremsvorrichtung (1) gemäß Anspruch 6, **dadurch gekennzeichnet, dass** ein Betriebsbremsvorgang wenigstens zwei Phasen aufweist, wobei
• in einer ersten Phase des Betriebsbremsvorgangs keine Kraft von der Betriebsbremse auf die Bremsscheibe übertragen wird, und
• in einer zweiten Phase des Betriebsbremsvorgangs eine Kraft von der Betriebsbremse auf die Bremsscheibe (7) übertragen wird,
wobei mittels der Ansteuerung der Feststellbremse die erste Phase des Betriebsbremsvorgangs verkürzt, insbesondere überwunden, wird.

9. Verfahren zur Ansteuerung einer Bremsvorrichtung (1) gemäß Anspruch 6, **dadurch gekennzeichnet, dass** das Verfahren zur Ansteuerung der Bremsvorrichtung (1) mindestens 4 Schritte aufweist, wobei
• in einem ersten Schritt die Feststellbremse aktiviert wird und
• in einem zweiten Schritt aufgrund einer durch die Aktivierung veranlassten Veränderung der Feststellbremse, insbesondere Bewegung einer elektromechanischen Einrichtung, das elastische Element (13) an den Bremskolben (5) angelegt wird und
• in einem dritten Schritt aufgrund einer weiteren durch die Aktivierung veranlassten Veränderung der Feststellbremse, insbesondere weiteren Bewegung einer elektromechanischen Einrichtung, das elastische Element (13) derart unter Spannung gesetzt wird, dass die entstehende Kraft den Bremskolben (5') verschiebt und
• in einem vierten Schritt eine weitere Veränderung der Feststellbremse, insbesondere weitere Bewegung einer elektromechanischen Einrichtung, verhindert wird.

10. Steuergerät (9), eingerichtet um ein Verfahren gemäß den Ansprüchen 6 bis 9 auszuführen.

## Claims

1. Braking device (1) for a motor vehicle, which has a service brake and an automated parking brake and comprises at least one brake pad (8, 8') and a brake disk (7), wherein the brake pad (8, 8') can be placed against the brake disk (7), **characterized in that**, on the basis of activation of the parking brake, the brake pad (8, 8') can be placed against the brake disk (7) by means of an elastic element (13) in such a way that no braking force or only a small braking force acting on the motor vehicle is built up.

2. Braking device (1) for a motor vehicle according to Claim 1, **characterized in that** the parking brake places the brake pad (8, 8') against the brake disk (7) by means of the elastic element (13).

3. Braking device (1) for a motor vehicle according to Claim 1, **characterized in that** the elastic element (13) is configured as a spring system (13), which, in particular, is arranged between a spindle nut (4) of the parking brake and a brake piston (5').

4. Braking device (1) for a motor vehicle according to Claim 1, **characterized in that** the braking device (1) is designed to assume various states, wherein
• in a first state, no force is transmitted to the brake disk (7), and,
• in a second state, a force, in particular a small force, is transmitted to the brake disk (7) by means of the elastic element (13), and,
• in a third state, a force is transmitted to the brake disk (7) by means of a geometric link.

5. Braking device (1) for a motor vehicle according to Claim 1, **characterized in that** the elastic element (13) is designed in such a way that transmission of a movement and/or force, in particular an axial movement and/or force, from the parking brake to the brake disk (7) is made possible, and transmission of a movement and/or force, in particular axial movement and/or force, from the brake disk (7) to the parking brake is prevented.

6. Method for controlling a braking device (1) for a motor vehicle, which contains at least one brake actuator (2, 10), wherein the braking device (1) has at least one brake pad (8, 8') and a brake disk (7), **wherein** the brake pad (8, 8') is placed against the brake disk (7) by means of an elastic element (13), **characterized in that** the placing of the brake pads (8, 8') is accomplished by control of a parking brake in such a way that no braking force or only a small braking force acting on the motor vehicle is built up.

7. Method for controlling a braking device (1) according to Claim 6, **characterized in that** the parking brake is controlled by means of path control.

8. Method for controlling a braking device (1) according to Claim 6, **characterized in that** a service braking operation has at least two phases, wherein,
• in a first phase of the service braking operation, no force is transmitted from the service brake to the brake disk, and,
• in a second phase of the service braking operation, a force is transmitted from the service brake to the brake disk (7),
wherein the first phase of the service braking operation is shortened, in particular eliminated, by means of the control of the parking brake. '

9. Method for controlling a braking device (1) according to Claim 6, **characterized in that** the method for controlling the braking device (1) has at least 4 steps, wherein,
• in a first step, the parking brake is activated, and,
• in a second step, the elastic element (13) is placed against the brake piston (5) by virtue of a change in the parking brake brought about by the activation, in particular a movement of an electromechanical device, and,
• in a third step, the elastic element (13) is put under stress in such a way, by virtue of a further change in the parking brake brought about by the activation, in particular a further movement of an electromechanical device, that the force which arises moves the brake piston (5'), and,
• in a fourth step, a further change in the parking brake, in particular a further movement of an electromechanical device, is prevented.

10. Control unit (9) designed to carry out a method according to Claims 6 to 9.

## Revendications

1. Dispositif de freinage (1) pour un véhicule automobile, lequel dispositif comporte un frein de service et un frein de stationnement automatisé ainsi qu'au moins une garniture de frein (8, 8') et un disque de frein (7), dans lequel la garniture de frein (8, 8') peut être appliquée contre le disque de frein (7),
**caractérisé en ce qu'**en raison d'un actionnement du frein de stationnement, la garniture de frein (8, 8') peut être appliquée contre le disque de frein (7) au moyen d'un élément élastique (13) de telle sorte qu'aucune force de freinage ou que seulement une faible force de freinage agissant sur le véhicule automobile soit produite.

2. Dispositif de freinage (1) pour un véhicule automobile selon la revendication 1, **caractérisé en ce que** le frein de stationnement applique la garniture de frein (8, 8') contre le disque de frein (7) au moyen de l'élément élastique (13).

3. Dispositif de freinage (1) pour un véhicule automobile selon la revendication 1, **caractérisé en ce que** l'élément élastique (13) est configuré en tant que système de ressort (13), lequel est disposé en particulier entre un écrou de broche (4) du frein de stationnement et un piston de frein (5').

4. Dispositif de freinage (1) pour un véhicule automobile selon la revendication 1, **caractérisé en ce que** le dispositif de freinage (1) est conçu pour adopter différents états
• dans un premier état, aucune force n'est transmise au disque de frein (7) et
• dans un deuxième état, une force en particulier faible est transmise au disque de frein (7) au moyen de l'élément élastique (13) et
• dans un troisième état, une force est transmise au disque de frein (7) au moyen d'une liaison géométrique.

5. Dispositif de freinage (1) pour un véhicule automobile selon la revendication 1, **caractérisé en ce que** l'élément élastique (13) est conçu de telle sorte qu'une transmission d'un déplacement et/ou d'une force, en particulier axial(e)/axiaux, du frein de stationnement au disque de frein (7) est rendue possible, et qu'une transmission d'un déplacement et/ou d'une force, en particulier axial(e)/axiaux, du disque de frein (7) au frein de stationnement est empêchée.

6. Procédé de commande d'un dispositif de freinage (1) pour un véhicule automobile, lequel dispositif comporte au moins un actionneur de frein (2, 10), le dispositif de freinage (1) possédant au moins une garniture de frein (8, 8') et un disque de frein (7),
dans lequel la garniture de frein (8, 8') est appliquée contre le disque de frein (7) au moyen d'un élément élastique (13),
**caractérisé en ce que** l'application des garnitures de frein (8, 8') s'effectue au moyen d'une commande d'un frein de stationnement de telle sorte qu'aucune force de freinage ou que seulement une faible force de freinage agissant sur le véhicule automobile soit produite.

7. Procédé de commande d'un dispositif de freinage (1) selon la revendication 6, **caractérisé en ce que** la commande du frein de stationnement s'effectue au moyen d'une commande de course.

8. Procédé de commande d'un dispositif de freinage (1) selon la revendication 6, **caractérisé en ce qu'**une opération de freinage de service comprend au moins deux phases
• dans une première phase de l'opération de freinage de service, aucune force n'est transmise du frein de service au disque de frein et
• dans une deuxième phase de l'opération de freinage de service, une force est transmise du frein de service au disque de frein (7),
la première phase de l'opération de freinage de service étant écourtée, en particulier éliminée, au moyen de la commande du frein de stationnement.

9. Procédé de commande d'un dispositif de freinage (1) selon la revendication 6, **caractérisé en ce que** le procédé de commande du dispositif de freinage (1) comprend au moins 4 étapes,
• le frein de stationnement étant activé dans une première étape et
• dans une deuxième étape, en raison d'une modification du frein de stationnement provoquée par l'activation, en particulier d'un déplacement d'un dispositif électromécanique, l'élément élastique (13) étant appliqué contre le piston de frein (5) et
• dans une troisième étape, en raison d'une autre modification du frein de stationnement provoquée par l'activation, en particulier d'un autre déplacement d'un dispositif électromécanique, l'élément élastique (13) étant mis sous contrainte de telle sorte que la force se produisant déplace le piston de frein (5') et
• dans une quatrième étape, une autre modification du frein de stationnement, en particulier un autre déplacement d'un dispositif électromécanique, est empêché(e).

10. Appareil de commande (9), conçu pour mettre en œuvre un procédé selon les revendications 6 à 9.
